# EUROPÄISCHE PATENTSCHRIFT

(11) **EP 0 925 215 B1**
(45) Veröffentlichungstag und Bekanntmachung des Hinweises auf die Patenterteilung: **05.04.2000**
(21) Anmeldenummer: 97944706.7
(22) Anmeldetag: 12.09.1997
(51) Int. Cl.: B60V 1/22

(54) **BODENEFFEKTFAHRZEUG**
GROUND EFFECT VEHICLE
VEHICULE A EFFET DE SOL

(30) Priorität: 14.09.1996 DE 19637544
(43) Veröffentlichungstag der Anmeldung: 30.06.1999
(73) Patentinhaber: Fischer Flugmechanik, 47877 Willich (DE)
(72) Erfinder: FISCHER, Hanno, D-47877 Willich (DE); MATJASIC, Klaus, D-41366 Schwalmtal (DE)
(74) Vertreter: Vomberg, Friedhelm, Dipl.-Phys.
(86) Internationale Anmeldenummer: DE9702056
(87) Internationale Veröffentlichungsnummer: WO9810968

(56) Entgegenhaltungen:
- DE-A- 1 813 311
- DE-A- 2 523 938
- FR-A- 2 281 272
- US-A- 5 373 800

## Beschreibung

Die Erfindung betrifft ein Bodeneffektfahrzeug nach dem Oberbegriff des Anspruches 1.

Solche Bodeneffektfahrzeuge sind beispielsweise aus der DE 44 05 152 A1 bekannt. Wie bereits dort beschrieben wird, wird zum Starten eines Bodeneffektfahrzeuges zunächst ein aerostatischer Auftrieb ausgenutzt, der dadurch erzeugt wird, daß Luft durch ein Antriebsaggregat in einen im wesentlichen dichten Raum unter die Tragflächenunterseiten des Rumpfes geblasen wird, womit ein Luftkissen erzeugt wird, dessen gegenüber der Umgebungsluft erhöhter Druck einen Auftrieb erzeugt. Bei Vorwärtsbewegung des Bodeneffektfahrzeuges führt ein auf die am Tragflügel schwenkbar angeordneten Klappen anstehender Luftdruck zu deren Umklappen, so daß durch die nach vorne gerichtete Einströmöffnung Luft in den Raum zwischen dem Fahrzeugboden und der Wasser- oder Landeoberfläche strömen kann. Da an den Seiten und dem hinteren Rand der genannte Raum abgedichtet bleibt, erlaubt die Vorwärtsbewegung des Fahrzeuges den Aufstau des aerodynamisch erzeugten Luftstromes und damit eine Überdruckerzeugung, die einen aerodynamischen Bodeneffektauftrieb bewirkt. Bei den nach dem Stand der Technik bekannten Bodeneffektfahrzeugen ergibt sich jedoch das Problem, daß zur Erzeugung eines zum Abheben aus dem Wasser ausreichenden dynamischen Luftkissens eine von der Flächenbelastung abhängige Startgeschwindigkeit erforderlich ist. Die gegenüber der Luft ca. 800-fach höhere Dichte des Wassers verursacht aber in der wassergebundenen Startphase einen ca. 2- bis 2,7-fachen höheren Widerstand gegenüber der luftgetragenen Reisephase, der um so höher wird, je größer die Abhebegeschwindigkeit ist. Um dies zu erfüllen, müssen die Flächenbelastungen relativ niedrig gehalten werden, was zu großen Flügelabmessungen (Spannweiten) führt. Um die beim Starten gegenüber der Flugbewegung notwendigerweise überhöhte Antriebsleistung zu begrenzen, sind daher unterhalb eines relativ groß gewählten Rumpfkörpers Seitenschenkel als Endscheiben vorgesehen, die auch als Außenschwimmer, insbesondere in Form eines Katamaranschwimmers ausgebildet sind. Die hintere Stauraumabdichtung wird durch die Tragflügelhinterkante erreicht, die gegen die Strömungsrichtung angestellt ist. Ein gemeinsames Problem aller Bodeneffektfahrzeuge liegt darin, daß der durch den Bodeneffekt entstehende Auftriebsgewinn bei gleichzeitiger Widerstandsverminderung nur dann ausnutzbar ist, wenn ein relativ kleiner Abstand vom Tragwerk zum Boden bzw. Wasser eingehalten wird. Dieser Abstand, der auch als Flughöhe angesehen werden kann, ist jedoch nur dann einzuhalten, wenn keine größeren Hindernisse zu überfliegen sind. Hierbei besteht insbesondere das Risiko, das Bodeneffektfahrzeug durch Höhenruderbetätigung zu "überziehen", was infolge der geringen Höhe bzw. Flughöhe kein Abfangen, wie bei Flugzeugen, ermöglicht. Darüber hinaus besteht bei Querruderbetätigung die Gefahr, daß Tragflügel mit weiter Spannweite im Kurvenflug die Wasser- oder Bodenoberfläche berühren. Aus diesem Grund ist daher von den zumindest in der Startphase wünschenswerten großen Flügelspannweiten Abstand genommen worden, die auch aufgrund des größeren umbauten Raumes und des steigenden Gewichtes, der eingeschränkten Manöverierbarkeit beim Anlegen, Hafeneinfahrten sowie der eingeschränkten Benutzbarkeit von Flüssen und Kanälen, Schleusen etc. als nachteilig angesehen worden sind. Hinzu kommt, daß die für den Start notwendige installierte überhöhte Antriebsleistung nicht, wie bei Flugzeugen, zu Erhöhung der Reisegeschwindigkeit genutzt werden kann. Durch den mit wachsender Fluggeschwindigkeit kleiner werdenden Anstellwinkel, durch den die Staueintrittsfläche im Verhältnis zur Austrittsfläche an der Hinterkante zunehmend kleiner wird, geht nicht nur die Auftriebserhöhung durch den Aufstau verloren, sondern auch die automatische Höhenstabilität. Diese ist jedoch für den sicheren Betrieb von Bodeneffektfahrzeugen notwendig, um Wasserberührungen im Reiseflug zu vermeiden.

Aus der FR-A-2 281 272 ist es bekannt, die Tragflügel an einem Bodeneffektfahrzeug über Stellzylinder komplett nach oben zu schwenken, um einen konstanten Anstellwinkel beizubehalten, so daß bei unterschiedlichen Auststellwinkeln des Tragflügels der Stauraum durch die immer etwa parallel zur Spiegelfläche liegenden Hinterkanten abgeschlossen wird.

Es ist Aufgabe der vorliegenden Erfindung, das eingangs genannte Bodeneffektfahrzeug dahingehend weiterzubilden, die Flächenbelastung beim Start durch möglichst großen tragenden Flächeninhalt zu verringern, um eine geringe Abwassergeschwindigkeit zu erreichen, aber diese im Fluge zu erhöhen.

Diese Aufgabe wird durch das Bodeneffektfahrzeug nach Anspruch 1 gelöst. Die jeweils außen angeordneten Teile des Tragflügels sind nach oben, vorzugsweise um einen Schwenkwinkel von bis 90° schwenkbar angelenkt. Mit dieser Maßnahme kann die Flächenbelastung dem jeweiligen Betriebszustand durch Veränderung des den Stauauftrieb erzeugenden Tragflächeninhaltes angepaßt werden. Um die ausnutzbare Geschwindigkeitsspanne zu erhöhen, wird erfindungsgemäß die tragende Fläche im Flug verkleinert, so daß der notwendige positive Anstellwinkel auch bei hoher Geschwindigkeit aufrecht erhalten werden kann. Die Drehachse ist vorzugsweise so gewählt, daß im hochgeklappten Zustand der kleinstmögliche Widerstand verbleibt, der nahe bei 0 liegt. Als weiterer Vorteil ergibt sich, daß die Tragflügelspannweite bei Hafeneinfahrten, in Flußläufen, Kanälen, Schleusen etc. entsprechend verringert werden kann, so daß auch schmale Wasserwege benutzbar sind. Um die Manöverierbarkeit des Bodeneffektfahrzeuges, insbesondere zwecks Vermeidung von Kollisionen mit Hindernissen, wie Schiffen, Inseln, Felsvorsprüngen, im Wasser treibenden Körpern, Eisschollen usw., zu vermeiden, sind kleine durchfahrbare Kurvenradien und schnelle Höhenänderungen wünschenswert. Hierzu werden die Hinterkantenklappen am Rumpf, den Tragflügeln, insbesondere den Tragflügelteilen symmetrisch oder unsymmetrisch (zur Fahrzeuglängsachse) bzw. gegeneinander ansteuerbar ausgebildet. Geteilte Hinterkantenklappen können unterschiedlich ausgeschlagen werden, insbesondere um eine Schräglage zum koordinierten Kurvenflug einnehmen zu können. Beispielsweise können die Klappen am Innenteil, das entweder nur aus dem Rumpf oder aus dem Rumpf und den inneren Flügelteilen bestehen kann, gleichsinnig entsprechend wie bei Landeklappen bei Flugzeugen ausgeschlagen werden, so daß der Auftrieb und der Bodenabstand schlagartig vergrößert werden kann, ohne daß der Anstellwinkel vergrößert werden muß. Die Winkellage des Rumpfes und damit der Fahrgastkabine bleibt hierbei unverändert. Weiterhin wird das Überziehen durch Wahl eines zu großen Anstellwinkels am Tragwerk mit der Folge eines Strömungsabrisses vermieden. Dies ist insbesondere bei geringen Flughöhen, in denen das Überziehen nicht mehr auszugleichen wäre, von großer Bedeutung. Ferner ist ein Abfangen des Bodeneffektfahrzeuges bei Bodenannäherung durch Betätigung eines Höhenruders nicht mehr erforderlich. Damit kann auch die notwendige Höhensteuerung einschließlich des Höhensteuerruders sowie der zu dessen Betätigung notwendigen Steuerorgane entfallen. Durch den verminderten Steuerungsaufwand des Bodeneffektfahrzeuges erübrigen sich besondere Pilotenerfahrungen bzw. Pilotenlizenzen. Die Flügel- und Klappenanordnung ist so gewählt, daß eine vertikale Höhenänderung des Bodeneffektfahrzeuges ohne Änderung der Rumpflage einstellbar ist, was den Passagierkomfort erheblich verbessert. Dies wird dadurch erreicht, daß durch positive oder (vorzugsweise) negative Pfeilung ein Ausgleich der Momente um den Bodeneffektfahrzeug-Schwerpunkt erfolgt. Die Klappenanordnung kann mit den Hinterkantenklappen der klappbaren Flügelaußenflächen so kombiniert werden, daß eine Überlagerung erfolgt, mit der die Höhe und die Schräglage gemeinsam steuerbar ist. Durch die entsprechende Kopplung der Flügel- bzw. Rumpfinnenklappen mit den Flügelaußenklappen kann für den Kurvenflug gleichzeitig eine Vergrößerung der Flughöhe erreicht werden, wodurch die Wasserberührung mit dem abgesenkten Außenflügel vermeidbar ist. Die an den äußeren Tragflügelteilen angeordneten Hinterklappen sind insbesondere derart ansteuerbar und schwenkbar, daß sie als Querruder, Seitenruder und/oder als Luftbremse wirken können. Mit entsprechenden Hinterkantenklappen der äußeren Tragflügelteile läßt sich durch inneres Ausklappen eine Bremswirkung erzeugen, mit der die Strömung des davorliegenden Tragflächenanteiles zur Ablösung gebracht wird, wodurch der Auftrieb abfällt und demzufolge eine schnellere Wasserberührung ermöglicht wird. Durch dieses bremsbedingte schnelle Absenken des Bodeneffektfahrzeuges verkürzt sich der gesamte Bremsweg, der bei Wasserberührung entsprechend kürzer ist. Die Anlenkachse der Außenflügelteile ist derart schräg gelegt, daß im hochgeklappten Zustand der wirksame Anstellwinkel so verkleinert wird, daß der hierdurch erzeugte Winkel den geringsten Widerstand erzeugt. Es entsteht dann eine Art Schränkung ohne weitere Auftriebserzeugung, die in diesem Zustand weder erforderlich noch wünschenswert wäre.

Im Rumpf und/oder an den Tragflügeln sind Hinterkantenklappen angeordnet, die um jeweilige Horizontalachsen schwenkbar sind. Solche Hinterkanten sind im Flugzeugbau als Landeklappen oder Querruder grundsätzlich bekannt. Bei Bodeneffektfahrzeugen schaffen sie den Vorteil, daß sich durch die Hinterkantenklappen die Flughöhe steuern läßt, womit nicht nur das ansonsten erforderliche Höhenruder entfallen kann, sondern auch entsprechende Pilotenkenntnisse zur Höhenrudersteuerung. Durch die Hinterkantenklappenbetätigung wird das Bodeneffektfahrzeug zwangsweise angehoben, so daß aufgrund der höheren Flughöhe Wasser- oder Bodenberührkontakte der Tragflügelenden nicht mehr auftreten.

Weiterbildungen des Bodeneffektfahrzeuges sind in den Unteransprüchen beschrieben.

Nach einer Weiterbildung der Erfindung ist der Bodeneffektfahrzeugrumpf als Katamaran ausgebildet, wobei insbesondere die Seitenschenkelenden als Schwimmkörper dienen. Die Katamaranausbildung schafft eine gute Schwimmstabilität sowie eine Kentersicherheit, insbesondere bei Windbewegungen sowohl bei stehendem als auch langsam auf dem Wasser bewegten Bodeneffektfahrzeug.

Die jeweils außen angeordnete Tragflügelteile sind nach einer weiteren Ausgestaltung der Erfindung als zweiarmiger schwenkbarer Hebel ausgebildet und derart am inneren rumpfbenachbarten Flügelteil angelenkt sind, daß die hochgeschwenkten Flügelteile eine nach unten gerichtete Endscheibe bilden, deren freies Ende unterhalb des rumpfbenachbarten Flügelteiles endet und so den unterhalb des rumpfbenachbarten Flügelteiles liegenden Stauraum seitlich nach außen begrenzt. Durch diese Anordnung kann für den Start des Bodeneffektfahrzeuges ein Flächeninhalt mit einem großen wirksamen Stauauftrieb erzeugt werden, der die Startgeschwindigkeit und damit die hierfür zu installierende Antriebsleistung senkt. Mit wachsender Fluggeschwindigkeit verringert sich der Anstellwinkel bis zum Optimum der besten Gleitzahl. Um diesen Winkel, der auch die Geschwindigkeit mit automatischer Höhenhaltung begrenzt, nicht zu unterschreiten, wird der Außenflügel (Tragflügelaußenteil) stufenweise oder kontinuierlich so hochgeschwenkt, daß eine der jeweiligen Geschwindigkeit angepaßte Flächenbelastung mit optimalem Anstellwinkel beibehalten wird. Die Anlenkung der schwenkbaren Tragflügelaußenteile (oder der Tragflügel) ist ferner so gewählt, daß sich der Anstellwinkel bis zur Senkrechten hin so verkleinert, daß diese als Winglets den geringstmöglichen Widerstand erzeugen, aber gleichzeitig mit der beschriebenen Endscheibenwirkung nach oben hin das wirksame Seitenverhältnis verbessern können. Vorzugsweise liegt die Anlenkachse zwischen dem rumpfbenachbarten Flügelteil und dem außen angeordneten Flügelteil im Bereich der rumpfbenachbarten Flügelteildachfläche, wobei die gemeinsamen Anlageflächen des rumpfbenachbarten Flügelteiles und des außen angeordneten Flügelteiles in unverschwenktem Zustand schrägwinklig zur Bodeneffektfahrzeugmittelebene (Horizontalebene) liegen. Durch diese schrägwinklig angeordnete gemeinsame Anlagefläche und die Lage der Schwenkachse wird erreicht, daß im unverschwenkten Zustand ein dachwie unterseitig ebener einheitlicher Flügel vorliegt und daß die schrägliegende Anlagefläche des äußeren Flügelteiles nach entsprechendem Hochschwenken die innere seitliche Endscheibenfläche bildet. Hierdurch wird die Bauteilzahl der Tragflügelteile sowie der entsprechenden Steuergeräte minimal gehalten.

Das Stellglied für die Schwenkbewegungen des außen angeordneten Flügelteiles arbeitet vorzugsweise hydraulisch und ist elastisch federnd ausgebildet, um durch Wasserberührung entstehende Überlasten, die über den beim Fahrbewegungen maximal entstehenden Luftlasten liegen, abzufedern. Betreffende Federelemente lassen sich durch Gaspolster oder elastische Zwischenglieder realisieren. Die Dimensionierung der Federwirkung richtet sich danach, daß die Luftlasten flatterfrei getragen werden können, jedoch höhere Lasten, wie sie z.B. bei Wasserschlägen durch Wellen auftreten können, durch entsprechende Arbeitsaufnahme abgefedert werden. Durch diese Maßnahme lassen sich nicht nur die Außenflächen, sondern auch die Innenflächen der Flügel durch Verringerung der Anschlußkräfte leichter ausführen. Gleichzeitig werden die vertikalen Beschleunigungslasten beim Start verringert, was zu einer weiteren Entlastung und Verbesserung des Passagierkomfort führt.

Ausführungsbeispiele der Erfindung sind in den Zeichnungen dargestellt. Es zeigen
- Fig. 1: eine Draufsicht auf ein Bodeneffektfahrzeug mit einem als Katamaran ausgebildeten Rumpf und beidseitig angeordneten Tragflügeln,
- Fig. 2: eine Vorderansicht des Bodeneffektfahrzeuges nach Fig. 1 mit der Startflügelstellung auf der linken Seite und unterschiedlichen Klappstellung des Tragflügels auf der rechten Seite,
- Fig. 3: eine Draufsicht auf ein Bodeneffektfahrzeug mit einem katamaranartigen Rumpf, beidseitig angeordneten Tragflügeln mit schwenkbaren äußeren Tragflügelteilen,
- Fig. 4: eine Vorderansicht des Bodeneffektfahrzeuges nach Fig. 3 mit unterschiedlichen Schwenkstellungen des äußeren Tragflügelteiles,
- Fig. 5: eine Ansicht entsprechend Fig. 4 mit anderen Schwenkstellungen der Tragflügel,
- Fig. 6: eine Anordnung gemäß Fig. 4 oder 5 mit federnd gelagertem Außenflügelteil,
- Fig. 7: eine Ansicht des Bodeneffektfahrzeuges gemäß Fig. 4bis 6 mit beidseitig hochgeklappten Außenflügelteilen zur Spannweitenverringerung,
- Fig. 8: eine Draufsicht eines Bodeneffektfahrzeuges mit nach unten ausgeschlagenen Tragflügelhinterkantenklappen,
- Fig. 9: einen Schnitt durch einen Tragflügel mit positivem Klappenausschlag,
- Fig. 10: eine Draufsicht auf ein Bodeneffektfahrzeug in unsymmetrischer Klappenausschlag-Stellung zur Einstellung einer Schräglage,
- Fig. 11: einen Schnitt durch einen äußeren Tragflügelteil mit unterschiedlichen Hinterklappenstellungen,
- Fig. 12: einen Schnitt entsprechend Fig. 11 mit einer weiteren Hinterklappeneinstellung,
- Fig. 13: eine Rückansicht eines Bodeneffektfahrzeugen beim Kurvenflug mit gleichzeitiger Höhenabstandsänderung durch gewählte Klappeneinstellung,
- Fig. 14 und 15: Draufsichten auf ein Bodeneffektfahrzeug mit hochgeklapptem Außenflügelteil und unterschiedlichen Hinterklappenstellungen des Außenteiles.

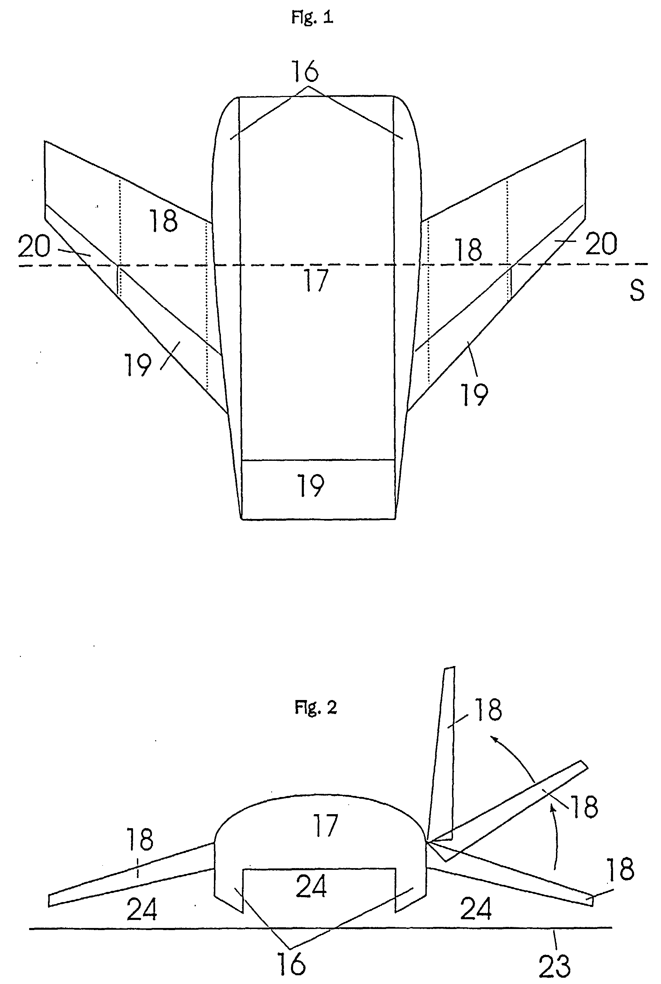

Die in den Fig. 1 bis 15 dargestellten Bodeneffektfahrzeuge besitzen einheitlich einen Rumpf, der als Schwimmkörper 16 ausgebildete, nach unten gerichtete Seitenschenkel sowie ein als Fahrgastkabine ausgebildetes überspannendes Flügelmittelteil 17 besitzt. Beidseitig des Rumpfes sind Tragflügel angeordnet, die entweder als ganzes oder im Bereich ihrer außen angeordneten Teile um bis zu 90° nach oben schwenkbar sind. Die jeweils schwenkbaren Teile sind mit Bezugszeichen 18 kenntlich gemacht. Rückseitig des Rumpfes sowie der Tragflügel sind jeweils Hinterkantenklappen 19 und 20 vorgesehen, die um jeweilige Horizontalachsen des Bodeneffektfahrzeuges schwenkbar sind. Das Bodeneffektfahrzeug kann außer der dargestellten Katamaran-Ausgestaltung auch als reines Luftkissenfahrzeug bis hin zum Tragflächenboot ausgestaltet sein. Die Antriebsorgane sowie die Einrichtungen zur Begrenzung des Luftkissens sind der Übersichtlichkeit halber fortgelassen und können im übrigen wie in der DE 44 05 152 A1 beschrieben ausgebildet sein, auf die in entsprechender Weise verwiesen wird. Die gestrichelte Linie S beinhaltet den Schwerpunkt des Bodeneffektfahrzeuges bzw. die Punkte, an denen die jeweiligen Gesamtauftriebskräfte wirksam werden.

Beim Start- und Fahrbetrieb wird in den unterhalb des Flügelmittelteiles 17 und der abgesenkten, im wesentlichen horizontal stehenden Tragflügel 18 ein Luftkissen im dortigen Raum 24 zwischen dem Bodeneffektfahrzeug und der Wasser- oder Bodenoberfläche 23 ausgenutzt. Die Ausbildung der statischen oder dynamischen Luftkissen wird im Detail in der DE 44 05 152 A1 beschrieben. Der in Fig. 2 linksseitig abgebildete Tragflügel 18 sowie der entsprechende rechte Tragflügel in der unteren dargestellten Stellung befinden sich in der Startstellung, in der ein möglichst großer aerostatischer Auftrieb entsprechend der Tragflügelspannweite ausnutzbar ist. Wie aus der Abbildung des rechten Tragflügels ersichtlich, können die Tragflügel 18 in disdreten oder kontinuierlichen Stufen nach der Startphase und dem Erreichen der Reisegeschwindigkeit um beliebige Winkel symmetrisch oder unsymmetrisch verschwenkt werden. Ein entsprechendes Verschwenken in die Vertikalrichtung kann auch zum Befahren enger Flußläufe, Hafeneinfahrten oder Schleusen ausgenutzt werden. In dem in Fig. 2 dargestellten Beispiel ist jeder der Tragflügel 18 als Einheit verschwenkbar.

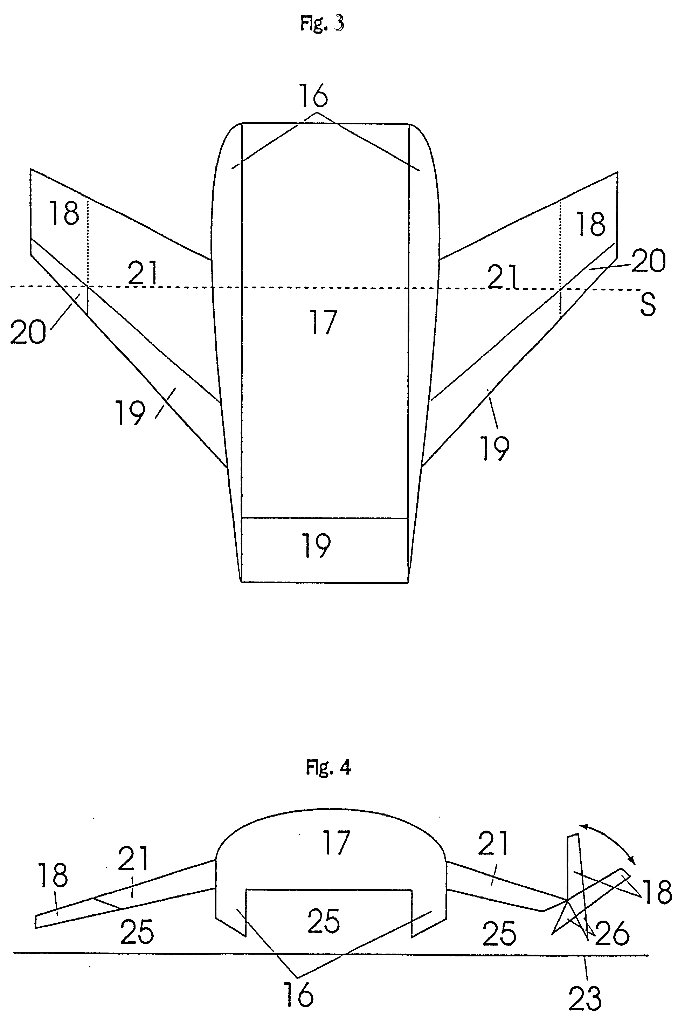

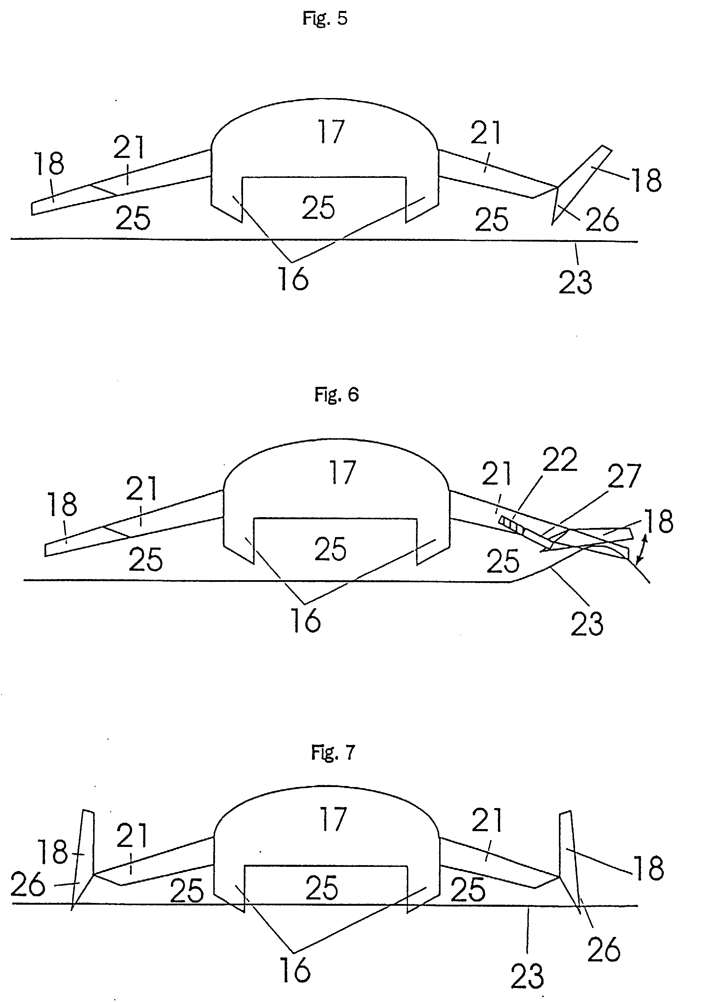

Im Unterschied hierzu zeigt Fig. 3 eine Anordnung von Tragflügeln, bei der der jeweils äußere Tragflügelteil 18 verschwenkbar ist. Der innere Tragflügelteil 21 ist hingegen unverschwenkbar am Bodeneffektfahrzeugrumpf angeordnet. Wie aus der linksseitigen Abbildung der Fig. 4 ersichtlich, liegt die gemeinsame Anlagefläche der Tragflügelteile 18 und 21 nicht vertikal, sondern schrägwinklig, wodurch sich beim Hochklappen des äußeren Tragflügelteiles 18 nach unten gerichtete Endscheiben 26 ausbilden, die den Luftstauraum 25 in der Reisestellung seitlich begrenzen. Hierdurch wird auch nach der Startphase bei hochgeklapptem Tragflügelteil ein verbesserter aerodynamischer Auftrieb gewährleistet. Fig. 5 zeigt eine unter einem andersartigen Schwenkwinkel verschwenkten Tragflügelaußenteil 18 mit entsprechend abgemindertem Stauraum 25 in Reisestellung.

Fig. 6 ist das hydraulische Stellglied 27 für die Einstellung des Schwenkwinkels des Tragflügelaußenteiles 18 zu entnehmen, daß mittels eines Federelementes 22 elastisch gelagert ist, so daß bei einem Gleitflug über wellenbewegtem Gewässer (siehe Welle 23) der äußere Tragflügelteil 18 bei Wasserberührung nachgeben kann. Die Federkonstante wird so gewählt, daß aerostatische oder aerodynamische Kräfte im Hinblick auf das äußere Tragflügelteil 18 nicht, sondern nur bei Wellenberührung wirksam werden. In entsprechender Weise wie zu Fig. 2 bereits erläutert, wird das Bodeneffektfahrzeug gemäß Fig. 7 bei Hafeneinfahrten oder beim Befahren schmaler Flußläufe, Schleusen etc. mit verringerter Spannweite durch Hochschwenken der äußeren Tragflügel 18 eingestellt.

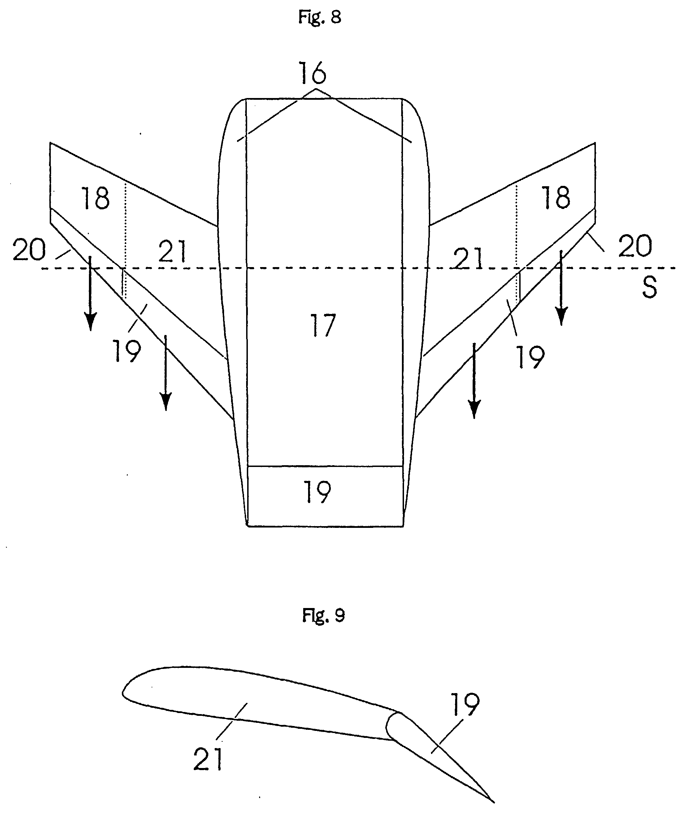

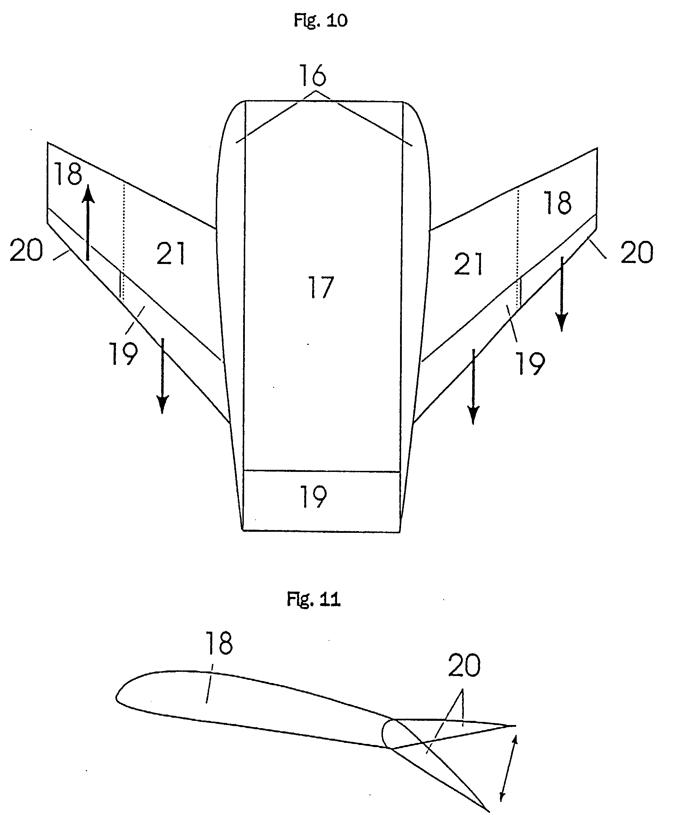

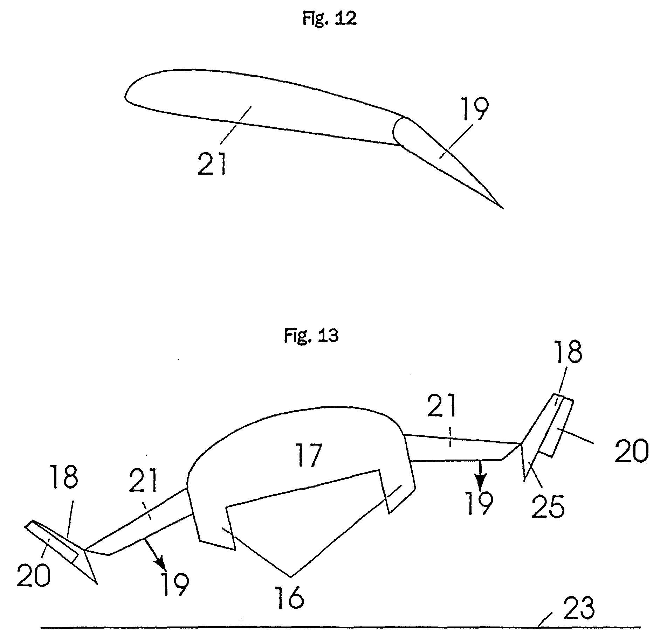

Wie insbesondere aus Fig. 9, 11 und 12 ersichtlich, sind die Hinterkantenklappen 20 der schwenkbaren Tragflügelteile 18 sowie die Hinterkantenklappen 19 der innere Flügelteile 21 bzw. des durch den Rumpf gegebenen Flügelmittelteiles 17 um eine Horizontale schwenkbar angelenkt. Vorzugsweise ist jede der Hinterkantenklappen 19, 20 getrennt schwenkbar, so daß symmetrische wie asymmetrische Klappeneinstellungen möglich sind. Fig. 8 und 9 zeigen jeweils nach unten ausgeschlagene Klappen 19 bzw. 20, die in der dargestellten Stellung eine Höhenänderung des Bodeneffektfahrzeuges auslösen. Fig. 10 und 11 verdeutlichen, daß durch unsymmetrischen Klappenausschlag an den Außenflügelanteilen 18 Bodeneffektfahrzeug-Schräglagen für den koordinierten Kurvenflug einstellbar sind. Hierzu wird Hinterkantenklappe 20 auf der in Fig. 10 dargestellten linken Seite nach oben und auf der gegenüberliegenden rechten Seite nach unten verstellt (siehe Einstellungen gemäß Fig. 11). Die Hinterkantenklappen 19 besitzen demgegenüber etwa die gleiche Stellung wie die nach unten verschwenkte Hinterkantenklappe 20 (Fig. 10, rechte Bildseite).

Die betreffende rückwärtige Sicht der in Fig. 10 bis 12 dargestellten Tragflügel- und Hinterkantenklappeneinstellung ist Fig. 13 zu entnehmen. Bei etwa gleichem Schwenkwinkel der Tragaußenflügel 18 ist die Hinterkantenklappe 20 des linken Tragaußenflügels 18 nach oben und die Hinterkantenklappe 20 auf der anderen Seite nach unten abgeschwenkt. Die Hinterkantenklappen 19 an den inneren Tragflügeln 21 sind nach unten in unterschiedlichem Maße, d.h. mit unterschiedlichem Schwenkwinkel verschwenkt, wie dies anhand der unterschiedlich langen Pfeile sichtbar ist. Die Verschwenkung der Hinterkantenklappen 19 nach unten bewirkt bei dem dargestellten Kurvenflug eine Erhöhung des Abstandes zum Boden bzw. der Wasseroberfläche 23.

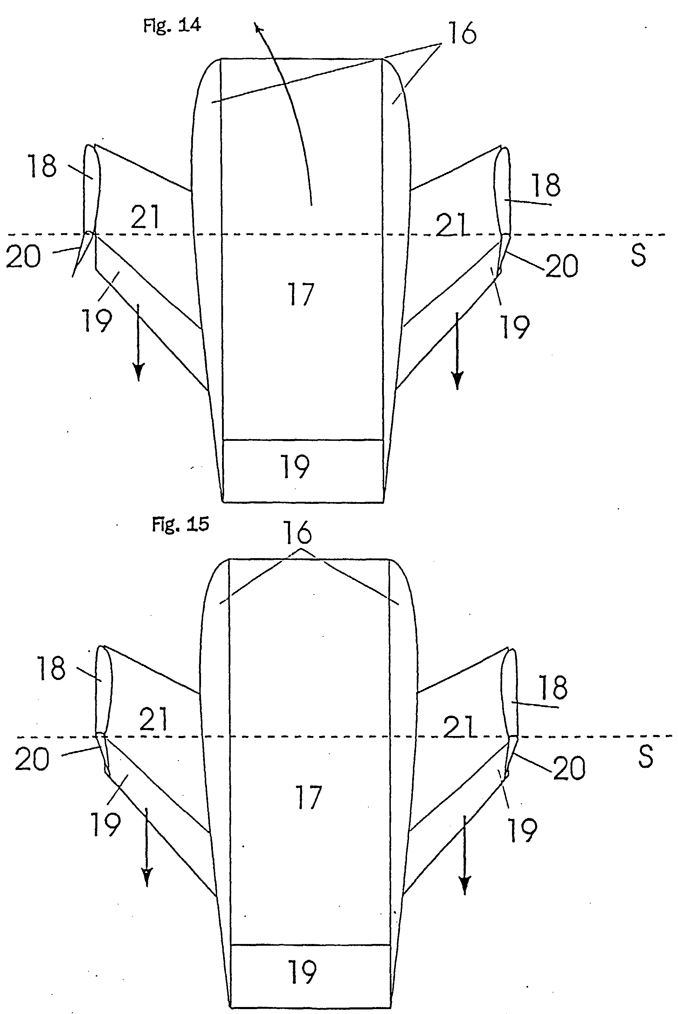

Fig. 14 ist zu entnehmen, wie bei hochgestellten Tragaußenflügeln 18 die Hinterkantenklappen 20 als Seitenruder einsetzbar sind. Das Wegklappen der Hinterkantenklappen 20 nach unten (linke Blattseite) bzw. nach oben (rechte Blattseite) führt wegen der Vertikalstellung der Tragaußenflügel 18 zu einem seitlichen Abschwenken der Hinterkantenklappen 20, womit ein Linkskurvenflug eingeleitet wird. Die positiven und negativen Schwenkwinkel für die Hinterkantenklappen 20 können absolut gleich große, aber auch verschieden große Werte aufweisen.

Gemäß der Darstellung nach Fig. 15 sind beide Hinterkantenklappen 20 relativ zu den Tragaußenflügeln 18 nach oben verschwenkt, was durch die betreffende Vertikalstellung zu einem Einwärtsschwenken der Hinterkantenklappen 20 führt, die hierdurch eine Bremswirkung ausüben. Durch diese Bremswirkung wird gleichzeitig der Auftrieb der Außenflächen wegen des Strömungsabrisses vermindert, d.h., das Bodeneffektfahrzeug kann scheller auf die Wasseroberfläche abgesenkt werden.

## Patentansprüche

1. Bodeneffektfahrzeug mit einem Rumpf und beidseitig angeordneten Tragflügeln (18, 21), dadurch gekennzeichnet, daß die Tragflügel oder jeweils außen angeordnete Teile des Tragflügels (18) um eine Parallele zur Rumpfkörperlängsachse nach oben, vorzugsweise so um einen Schwenkwinkel von bis zu 90° so nach oben schwenkbar angelenkt sind, daß durch die Schwenkung eine der jeweiligen Geschwindigkeit angepaßte Flächenbelastung mit optimalem Anstellwinkel beibehalten wird, wobei durch positive oder negative Pfeilung ein Ausgleich der Momente um den Bodeneffektfahrzeugschwerpunkt erfolgt, daß jeder Tragflügelteil (18, 21) Hinterklappen (19, 20) aufweist, die wahlweise symmetrisch oder unsymmetrisch zur Rumpfkörperlängsachse ansteuerbar sind, und daß die an den äußeren Tragflügelteilen (18) angeordneten Hinterklappen (20) als Querruder, Seitenruder und/oder als Luftbremse wirken.

2. Bodeneffektfahrzeug nach Anspruch 1, dadurch gekennzeichnet, daß der Schwenkwinkel der außen angeordneten Flügelteile (18) bis zu 90° beträgt.

3. Bodeneffektfahrzeug nach Anspruch 1 oder 2, dadurch gekennzeichnet, daß der Rumpf als Katamaran ausgebildet ist, wobei insbesondere die Seitenschenkelenden Schwimmkörper (16) sind.

4. Bodeneffektfahrzeug nach einem der Ansprüche 1 bis 3, dadurch gekennzeichnet, daß außen angeordnete Tragflügelteile (18) als jeweils zweiarmige schwenkbare Hebel ausgebildet und derart am inneren rumpfbenachbarten Flügelteil (21) angelenkt sind, daß die hochgeschwenkten Flügelteile (18) eine nach unten gerichtete Endscheibe (26) bilden, deren freies Ende unterhalb des rumpfbenachbarten Flügelteiles (21) endet und so den unterhalb des rumpfbenachbarten Flügelteiles (21) liegenden Stauraum (25) seitlich nach außen begrenzt.

5. Bodeneffektfahrzeug nach Anspruch 5, dadurch gekennzeichnet, daß die Anlenkachse zwischen dem rumpfbenachbarten Flügelteil (21) und dem außen angeordneten Flügelteil (18) im Bereich der rumpfbenachbarten Flügelteildachfläche liegt und die gemeinsamen Anlageflächen des rumpfbenachbarten Flügelteiles (21) und des außen angeordneten Flügelteiles (18) im unverschwenkten Zustand schrägwinklig zur Bodeneffektfahrzeugmittelebene liegen.

6. Bodeneffektfahrzeug nach einem der Ansprüche 1 bis 5, dadurch gekennzeichnet, daß das Stellglied (27) für Schwenkbewegungen des außen angeordneten Flügelteiles (18) elastisch federnd ausgebildet ist, um durch Wasserberührung entstehende Überlasten, die über den bei Fahrbewegung maximal entstehenden Luftlasten liegen, abzufedern.

7. Bodeneffektfahrzeug nach einem der Ansprüche 1 bis 6, dadurch gekennzeichnet, daß die Hinterkantenklappen (19) des Rumpfes und der inneren Tragflügelteile (21) mit den Hinterkantenklappen (20) der äußeren Tragflügelteile (18) so gekoppelt sind, daß bei der durch einen unsymmetrischen Ausschlag der äußeren Hinterkantenklappen (20) entstehenden Schräglage des Bodeneffektfahrzeuges die inneren Hinterkantenklappen einen positiven Ausschlag zur Erhöhung des Boden- bzw. Wasserflächenabstandes ausführen.

## Claims

1. Ground vehicle with a hull and wings (18, 21) arranged on each side,
**characterised in that**
the wings or outer parts of the wings (18) are connected so as to pivot upwards about a line parallel to the longitudinal axis of the hull body, preferably about a pivot angle of up to 90° such that by pivoting a wing surface loading suited to the respective speed is maintained with an optimum attack angle, whereby the moments about the centre of gravity are compensated by positive or negative sweep, that each wing part (18, 21) has rear flaps (19, 20) that can optionally be controlled symmetrically or asymmetrically relative to the hull body longitudinal axis and that the rear flaps (20) located on the outer wing parts (18) act as ailerons, side rudders and/or as air brakes.

2. Ground effect vehicle according to claim 1, characterised in that the pivot angle of the outer wing parts (18) is up to 90°.

3. Ground effect vehicle according to claim 1 or 2, characterised in that the hull is formed as a catamaran wherein especially the side ends are floats (16).

4. Ground effect vehicle according to one of the claims 1 to 3, characterised in that outwardly arranged wing parts (18) are formed as pivotal two-arm levers and are coupled so on the inner wing part (21) that the upwardly pivoted wing part (18) forms a downwardly directed end plate (26) whose free end lies below the wing part (21) adjacent to the hull and thus outwardly closes a pressure space (25) formed below the wing part (21) adjacent to the hull.

5. Ground effect vehicle according to claim 4, characterised in that the pivot axis between the wing part (21) adjacent to the hull and the outer wing part (18) lies in the region of the upper surface of the wing part adjacent to the hull and the common surfaces of the wing part (18) adjacent to the hull and of the outer wing part (18) in unpivoted condition extend at an incline to the central plane of the ground effect vehicle.

6. Ground effect vehicle according to one of the claims 1 to 5, characterised in that the actuator (27) for pivoting the outer wing parts (18) is elastically and resiliently mounted in order to absorb overloads created when touching the water which are greater than the maximum air loads emerged during flight.

7. Ground effect vehicle according to one of the claims 1 to 6, characterised in that the rear-edge flaps (19) of the hull and the inner wing parts (21) are so connected with the rear-edge flaps (20) of the outer wing parts (18) that, when the ground effect is tilted by asymmetrical deflection of the outer rear-edge flaps (20), the inner rear-edge flaps deflect positively to increase the spacing above the ground or the water surface.

## Revendications

1. Véhicule à effet de sol avec une coque et des ailes portantes (18, 21) disposées de part et d'autre, caractérisé par le fait que les ailes portantes ou des parties de l'aile portante (18) disposées respectivement à l'extérieur sont articulées de manière à pouvoir pivoter vers le haut autour d'une parallèle à l'axe longitudinal du corps de la coque, de préférence autour d'un angle de pivotement allant jusqu'à 90°, de telle manière que le pivotement permet de maintenir une charge de surface adaptée à la vitesse respective, avec un angle optimal d'attaque, les moments autour du centre de gravité du véhicule à effet de sol étant compensés par une flèche positive ou négative, que chaque partie (18, 21) de l'aile portante présente des volets arrière (19, 20) qui, en option, peuvent être commandés de manière symétrique ou asymétrique par rapport à l'axe longitudinal du corps de la coque, et que les volets arrière (20) disposés sur les parties extérieures (18) des ailes portantes agissent comme ailerons, gouvernails de direction et/ou en tant que frein à air.

2. Véhicule à effet de sol selon la revendication 1, caractérisé par le fait que l'angle de pivotement des parties (18) des ailes portantes, qui sont disposées à l'extérieur, présente une valeur allant jusqu'à 90°.

3. Véhicule à effet de sol selon la revendication 1 ou 2, caractérisé par le fait que la coque est formée en tant que catamaran dans le cas duquel en particulier les extrémités des branches latérales sont des flotteurs (16).

4. Véhicule à effet de sol selon l'une des revendications 1 à 3, caractérisé par le fait que des parties (18) de l'aile portante, disposées à l'extérieur sont formées respectivement en tant que leviers pivotants à deux bras et sont articulées sur la partie intérieure (21) de l'aile, qui est voisine de la coque, de telle manière que les parties (18) de l'aile; pivotées vers le haut forment une plaque terminale (26) dirigée vers le bas, dont l'extrémité libre se termine au-dessous de la partie (21) de l'aile, qui est voisine de la coque et limite ainsi latéralement vers l'extérieur l'espace (25) de refoulement d'air, qui est situé au-dessous de la partie (21) de l'aile, qui est voisine de la coque.

5. Véhicule à effet de sol selon !a revendication 4, caractérisé par le fait que l'axe d'articulation entre la partie (21) de l'aile, qui est voisine de la coque et la partie (18) de l'aile, qui est disposée à l'extérieur est situé dans la zone de la surface supérieure de la partie de l'aile, qui est voisine de la coque et que les surfaces communes d'appui de la partie (21) de l'aile, voisine de la coque et de la partie extérieure (18) de l'aile, en état non pivoté, sont situées de manière inclinée par rapport au plan médian du véhicule à effet de sol.

6. Véhicule à effet de sol selon l'une des revendications 1 à 5, caractérisé par le fait que le membre de réglage (27) pour des mouvements pivotants de la partie (18) de l'aile, disposée à l'extérieur, est réalisé de manière élastique afin d'absorber des surcharges produites par un contact avec l'eau, qui sont plus grandes que les charges de l'air générées au maximum lors de mouvements de marche.

7. Véhicule à effet de sol selon l'une des revendications 1 à 6, caractérisé par le fait que les volets de bord de fuite (19) de la coque et des parties intérieures (21) des ailes portantes sont couplés avec les volets de bord de fuite (20) des parties extérieures (18) des ailes portantes de telle manière que, lorsque le véhicule à effet de sol est mis en position inclinée par une déflexion asymétrique des volets extérieurs de bord de fuite (20), les volets intérieurs de bord de fuite exercent une déflexion positive pour augmenter la distance au sol ou bien à la surface d'eau.
